(19) Europäisches Patentamt

European Patent Office

Office européen des brevets

(11) **EP 1 672 868 A1**

(12) **EUROPEAN PATENT APPLICATION**

(43) Date of publication:
**21.06.2006 Bulletin 2006/25**

(51) Int Cl.:
***H04L 29/06*** (2006.01)

(21) Application number: **05024719.6**

(22) Date of filing: **11.11.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **15.12.2004 US 12670**

(71) Applicant: **Alcatel**
**75008 Paris (FR)**

(72) Inventors:
• **Wu, Fuming**
**Frisco, TX 75025 (US)**
• **Mohammed, Aziz**
**Plano, TX 75025 (US)**

(74) Representative: **Schäfer, Wolfgang**
**Dreiss, Fuhlendorf, Steimle & Becker**
**Postfach 10 37 62**
**70032 Stuttgart (DE)**

(54) **Presence system and method for transforming device view of presentity preferences into media view**

(57) A presence server transforms a presentities preferences from a device view to a media view by collecting raw preference data from the presentity in a variety of formats and processing the raw preference data to determine a preferred order of media types. The raw preference data includes a preference indication for each media type supported by each device associated with the presentity. The preferred order of media types can be provided to a watcher of the presentity.

FIG. 1

## Description

BACKGROUND OF THE INVENTION

Technical Field of the Invention

The present invention relates in general to a presence-based interactive communications system, and in particular, to providing presentity presence and preference information to a watcher of the presentity.

Description of Related Art

Presence-based interactive communication services are callee-centric, where callees (presentities) publish, in real time, their presence information (such as, the availability, activity, local time, location, current status of the active devices/applications and the corresponding preferences, etc.) to callers (presence watchers). The presence information is designed to enable the callers to more efficiently and effectively contact the callees. However, there are currently limitations on the collection and display of presence and preference information.

The status, capability as well as the callee's preference about his/her devices are among the most crucial primitive information for efficient and effective communication between callers and callees. A presentity may have a variety of devices registered to a network. For example, the current release of Microsoft® Live Communications Server® supports a maximum of 64 devices registered to the server per presentity, and the real-time states of all these devices can be distributed to the presence watchers. In addition, each presence watcher may subscribe to presence information from multiple presentities, and may have limited available space for displaying presence and preference information. As such, it has become difficult to clearly represent all the devices status information, as well as the associated preferences, in the presence watcher's graphical user interface (GUI).

Furthermore, devices are becoming dense in functionality, such that a single device may be capable of running multiple applications. Due to the increase in the number of applications per device, a watcher may have difficulty determining the actual capabilities of the presentity's devices. For example, a cell phone that supports voice communication and/or real-time text communication, such as SMS or IM, might also support multimedia communication. In addition, the cell phone may also have access to non-real-time applications, such as voice mail and e-mail. As another example, a personal computer (PC) may be capable of running multiple real-time applications, such as softphone or VoIP client applications for real-time voice communication, IM applications for real-time text communication, and perhaps, applications for real-time multimedia communications (video+). In addition, the PC may also support non-real-time applications, such as e-mail, voice-mail, video mail, fax and image.

In addition to the problems associated with the increases in both the number of devices per presentity and the number of applications per device, the preference information is currently limited to only device preferences. The device preferences are used to indicate a "preferred" device, regardless of the real-time state of other devices or the exact capabilities of each device. Moreover, the measurement of a presentities' device preferences is limited to a device priority indicator known as a q-value. A q-value is a numerical value in the unit interval [0,1]. There are currently no other mechanisms for presentities to input their device preferences or other communication preferences.

Therefore, what is needed is a presence system and method for inputting and collecting presentities' communication preferences, such as device and media type preferences, in a variety of formats. In addition, what is needed is a presence system and method for processing the presentities' communication preferences to obtain overall media preferences for a presentity which will be manageable and useful for the watchers.

SUMMARY OF THE INVENTION

Embodiments of the present invention provide a presence server capable of collecting raw preference data from a presentity in a variety of formats and processing the raw preference data to determine a preferred order of media types. The raw preference data includes a preference indication for each media type supported by each device associated with the presentity. The presence server provides the preferred order of media types to a watcher of the presentity.

In one embodiment, the raw preference data includes crisp data that indicates a q-value for the device, for each media type supported by the type and/or a q-value for each media type supported by each application running on each device. In another embodiment, the raw preference data can include crisp data and/or non-crisp data. Examples of non-crisp data include an order of preference of media types supported on each device associated with the presentity, a fuzzy preference relation of media types supported on each device associated with the presentity, a utility value for each media type supported on each device associated with the presentity and a linguistic ranking of media types supported on each device associated with the presentity. From the non-crisp data, a q-value for at least each media type supported on each device associated with the presentity can be determined.

In a further embodiment, the presence server processes the raw preference data (crisp data and/or non-crisp data) to compute a total q-value for each media type supported on each device. Based on the total q-value, the presence server further computes an overall q-value for each media type, and determines the preferred order of media types from the overall q-value computed for each media type.

Advantageously, embodiments of the present invention enable a clearer representation of presentities communications preferences by introducing media preferences. The overall media preferences can be computed and sorted in decreasing order of the q-values to provide media preference information, in addition to or in alternative to, device preference information. In addition, providing only media preference information reduces the display space on the presence watchers GUI. Furthermore, embodiments of the present invention allow preference data to be entered in a variety of formats to accommodate different types of users.

BRIEF DESCRIPTION OF THE DRAWINGS

A more complete understanding of the present invention may be obtained by reference to the following detailed description when taken in conjunction with the accompanying drawings wherein:

FIGURE 1 illustrates an exemplary presence system in accordance with embodiments of the present invention;

FIGURE 2 is a block diagram illustrating a presence system capable of collecting raw preference data in a variety of formats and processing the raw preference data to determine a preferred order of media types per presentity, in accordance with embodiments of the present invention;

FIGURE 3 illustrates an exemplary crisp data structure, in accordance with embodiments of the present invention;

FIGURE 4 illustrates an exemplary non-crisp data structure, in accordance with embodiments of the present invention; and

FIGURE 5 is a flowchart illustrating an exemplary process for transforming a device view of presentity preferences into a media view, in accordance with embodiments of the present invention.

DETAILED DESCRIPTION OF THE DRAWINGS

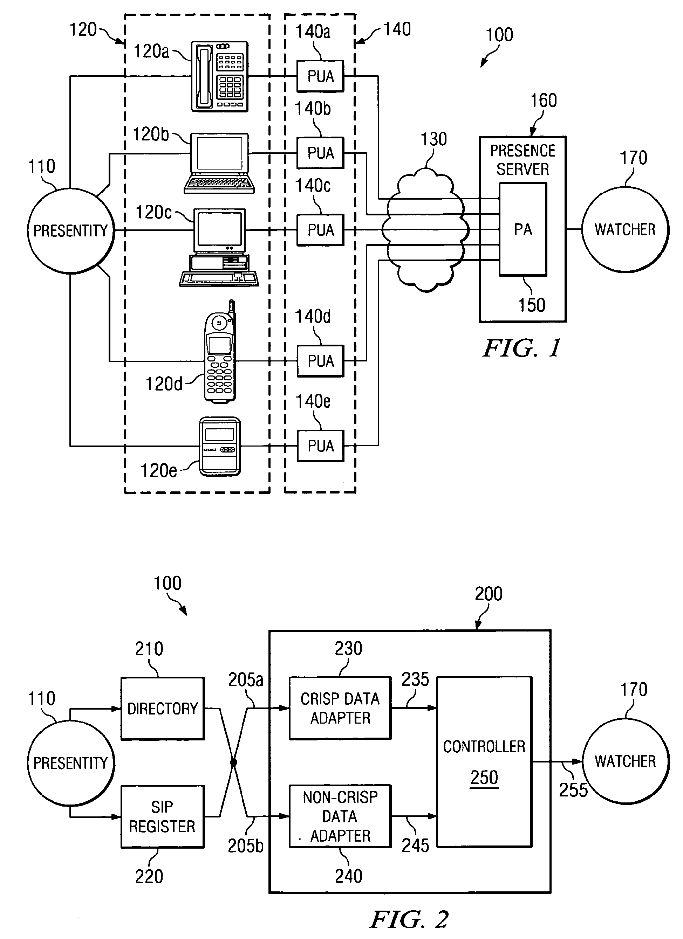

Referring to FIGURE 1, there is illustrated an exemplary presence system 100 capable of implementing various embodiments of the present invention. The presence system 100 includes a presentity 110 and one or more devices 120 associated with the presentity 110. The presentity 110 represents the callee and provides presence information on the callee's presence status to the presence system 100. Each device 120 is a physical communications device capable of sending and/or receiving communications over a communications network 130. Examples of such devices 120 include, but are not limited to, a desktop phone 120a, a laptop computer 120b, a personal computer 120c, a cell phone 120d and a personal digital assistant (PDA) 120e. In FIGURE 1, the communications network 130 represents any type of network over which media (circuit-switched or packet-switched voice or data) may be sent. For example, the communications network 130 can include the Public Switched Telephone Network (PSTN), Public Land Mobile Network (PLMN), one or more private local area networks (LANs), the Internet and/or any other type or combination of networks.

The presence system 100 further includes one or more presence user agents 140 (PUAs), a presence agent (PA) 150, a presence server 160 and one or more watchers 170 of the presentity 110. The PUAs 140 are capable of manipulating and providing presence information for the presentity 110. In FIGURE 1, a separate PUA 140 is shown for each device 120. However, it should be understood that in other embodiments, the number of PUAs 140 can vary based on the number and type of devices 120, the applications supported by the devices 120 and the system configuration. Each PUA 140 independently generates a component of the overall presence information for a presentity 110. Typically, PUA's 140 generate presence information when a change in presence status occurs. Examples of changes in presence status include, but are not limited to, turning on and off a device 120, modifying the registration from a device 120 and changing the instant messaging status on a device 120.

The presence information from each of the PUAs 140 is collected by one or more presence agents (PAs) 150. In FIGURE 1, only one PA 150 is shown for simplicity. However, it should be understood that in other embodiments, there can be multiple PAs 150 for a presentity 110, each of which is responsible for a subset of the total subscriptions (requests for presence information from watchers 170) currently active for the presentity 110. The PA 150 maintains the current complete presence information for the presentity 110 and provides the presence information to one or more watchers 170 (callers) of the presentity 110. The presence server 160 is a physical entity that can operate as either the PA 150 or as a proxy server for routing requests from watchers 170 to the PA 150. Thus, the PA 150 in combination with the presence server 160, is operable to receive presence information of the presentity 110 from the PUAs 140, receive requests from watchers 170 for the presence information and provide the presence information to the watcher(s) 170. When acting as a PA 150, the presence server 160 can also be co-located with a PUA 140.

The presence system 100 uses a presence protocol to provide presence services to presentities 110 and watchers 170. An example of a presence protocol that can be used in the presence system 100 is the Session Initiation Protocol (SIP), as described in J. Rosenberg, et al., "SIP: Session Initiation Protocol" RFC: 3261, June 2002 and in A. Roach, et al., "Session Initiation Protocol (SIP) - Specific Event Notification," RFC: 3265, June 2002, each of which are hereby incorporated by reference. SIP is an application-layer control protocol used to create, modify and terminate communication (voice, text and/or multimedia) sessions.

SIP can be used with other protocols, such as the Real-time Transport Protocol (RTP), the Real-Time Streaming Protocol (RTSP), the Session Description Protocol (SDP), the International Telecommunication Union - Telecommunications ("ITU-T") H.263 standard (video CODEC), the G.711 and G.729 standards (audio CODECs), and other or additional standards or protocols. As will be appreciated, other or additional protocols and configurations may be used.

SIP networks are capable of routing requests from any user on the network to the server that maintains the registration state for a user. Thus, SIP networks enable a caller (watcher) to transmit a SUBSCRIBE request for presence information relating to a particular callee (presentity 110) to be routed to the presence server 160 that maintains the presence information for the presentity 110. In operation, the presence server 160 and PA 150 may be co-located with the SIP proxy/registrar for efficiency purposes.

FIGURE 2 is a block diagram illustrating a presence system 100 capable of collecting raw preference data in a variety of formats and processing the raw preference data to determine a preferred order of media types per presentity 110, in accordance with embodiments of the present invention. The presentity 110 (callee) enters raw preference data 205 indicating the presentities' devices/media preferences (devices and/or media capabilities and related preferences) into the presence system 100 using a particular GUI. Presentities 110 can indicate their preferences of communications devices and the supported media types in one or more of a variety of formats. For example, the raw preference data 205 can be entered in either a crisp or a non-crisp manner, depending on the sophistication level of the presentity 110 and the options provided by the presence system 100. The available formats determine the particular GUI provided to the presentity 110. The raw preference data 205 can be stored, for example, either in the presentities' enterprise directory 210 under, for example, "user profiles" or in a SIP registrar server 220, if SIP is employed as the presence protocol.

A preference component 200 of the presence server, or in other embodiments, a Preference Engine, processes the raw preference data 205 to determine the presentities' overall preference for each media type. The preference component 200 of the presence server includes a crisp data adapter 230 for receiving crisp raw preference data 205a, a non-crisp data adapter 240 for receiving non-crisp preference data 205b and a controller 250 for processing the crisp and non-crisp raw preference data 205a and 205b to determine the overall preference for each media type and providing the overall preference for each media type to a watcher 170. As used herein, the term "controller" means any device, system or part thereof that controls at least one operation, which can be implemented in hardware, software, firmware, or some combination of the above. It should be noted that the functionality associated with the controller may be centralized or distributed, whether locally or remotely.

In one embodiment, if the presentity 110 enters a part or all of the raw preference data in a crisp format, the presentity provides a q-value for each device, each media type supported on each device and each media type supported by each application on each device. The entered q-values (crisp data 205a) are received by the crisp data adapter 230 and formatted according to the processing capabilities of the controller 250. The formatted crisp data 235 is input to the controller 250 for processing. It should be understood that the formatted crisp data 235 may be in the same format as the received crisp data 205a. In another embodiment, if the presentity 110 enters a part or all of the raw preference data in a non-crisp format, the non-crisp data adapter 240 receives the non-crisp raw preference data 205b and converts the non-crisp raw preference data 205b into q-values for each device and at least each media type supported on each device. If the non-crisp raw preference data 205b is specific to applications, the non-crisp data adapter 240 converts the non-crisp raw preference data 205b into q-values for each media type supported by each application on each device. The non-crisp data adapter 240 inputs the converted non-crisp data 245 to the controller 250 for processing.

The controller 250 computes the overall preferences for each media type from the formatted crisp raw preference data 235 and the converted non-crisp raw preference data 245, sorts the overall preferences for each media type and places them in decreasing order to provide a preferred order of media preferences 255. The preferred order of media preferences 255 is distributed via presence services and displayed to the presence watcher(s) 170 of the presentity 110.

It should be noted that the preference component 200 of the presence server (or Preference Engine) may be constructed or configured using hardware, software, firmware, or combination thereof for processing raw preference data 205 to determine the overall preferences for each media type, sorting the overall preferences and providing the sorted overall preferences 255 to the watcher 170. As an example, the preference component 200 of the presence server could include one or more processors that execute instructions and one or more memories that store instructions and data used by the processors. The processor is generally understood to be a device that drives a general-purpose computer. It is noted, however, that other processor devices such as microcontrollers, Field Programmable Gate Arrays (FPGAs), or Application Specific Integrated Circuits (ASICs), or a combination thereof, can be used as well and achieve the benefits and advantages described herein. In one embodiment, the preference component 200 of the presence server can include one or more processes, such as software applications providing an activity, a function, or a systematic sequence of tasks that produces a specified result, for processing the raw preference data 205.

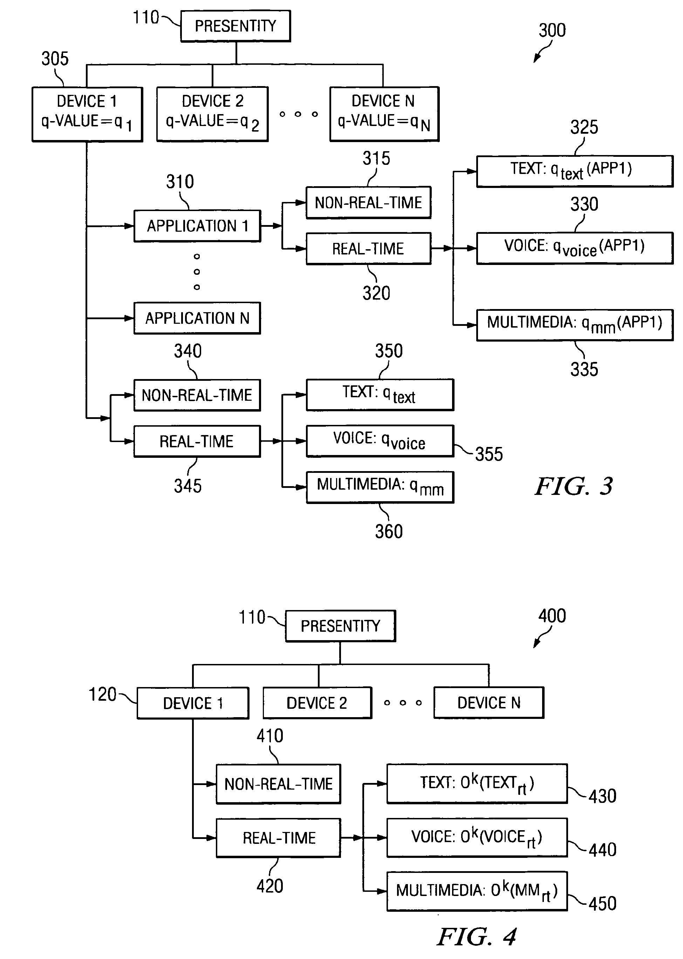

FIGURE 3 illustrates an exemplary crisp data structure 300, in accordance with embodiments of the present invention.

As discussed above, a presentity 110 may have multiple devices registered with the communications network. The presentity 110 can configure a q-value 305 for each of his/her devices. In one embodiment, a device may be monofunctional, i.e., only one media type (real-time, or non real-time) can be supported. In this embodiment, the preference for this media type is the same as the device. In another embodiment, a device may support multiple media types (real-time 350, or non real-time 340) without any applications running on it. In this embodiment, the presentity 110 can configure a q-value for each of the media types. For example, as shown in FIGURE 3, if a device (e.g., Device 1) includes the real-time media types of text, voice and multimedia, the presentity 110 can provide a separate q-value 350, 355 and 360, respectively, for each of the media types. If the presentity 110 indicates his/her devices preferences by configuring a q-value 305 for each device, without configuring any q-values 350, 355 and 360 associated with the media types supported by the device, the q-values 350, 355 and 360 for the media types supported by the device are automatically filled in with the value 1.0 (default q-value).

In a further embodiment, a device may run multiple applications on it. Moreover, a single application 310 (e.g., Application 1) may support multiple media types (real-time 320, or non real-time 315). In this embodiment, the presentity 110 can configure a q-value 325, 330 and 335 for each of the media types (text, voice and multimedia, respectively) supported by each application 310 running on the device. If the presentity 110 indicates his/her devices preferences by configuring a q-value 305 for each device and/or each media type (e.g., q-values 350, 355 and 360), without configuring any q-values associated with the different media types supported by each application 310 running on the device, the q-values 325, 330 and 335 for the media types supported by the different applications 310 are automatically filled in with the value 1.0 (default q-value).

As discussed above, devices and media preferences can also be indicated in a variety of non-crisp formats. The available media types can, in general, be divided into six groups for real-time and non real-time communications:

$X = \{text_{rt}, voice_{rt}, mm_{rt}, text_{nrt}, voice_{nrt}, mm_{nrt}\}$;

If a presentity has a set of devices, say, $D = \{D_1, D_2, .... D_n\}$, that can be used for communication, the presentity can non-crisply represent his/her media preferences in multiple different ways.

An example of a non-crisp data structure 400 is illustrated in FIGURE 4. In FIGURE 4, the non-crisp raw preference data is entered as a preference ordering for each media type. Thus, for each device 120 $D_k$, the presentity 110 provides his/her preferences for each media type (real-time 420, or non real-time 410) as an individual ordering (k = 1, ..., n) :

$O^k = \{o^k(text_{rt}), o^k(voice_{rt}), o^k(mm_{rt}), o^k(text_{nrt}), o^k(voice_{nrt}), o^k(mm_{nrt})\}$

For example, if a device 120 (e.g., Device 1) contains the media types of real-time text, real-time voice and real-time multimedia, the presentity 110 enters a preference order 430, 440 and 450, respectively, for each media type (i.e., 1, 2 or 3) to rank the media types in order of preference.

Another example of a non-crisp data format is a fuzzy preference relation format. For example, for device $D_k$, the presentity's preferences on X can be described by a fuzzy preference relation $R^k \subseteq X \times X$ (k = 1, ..., n) with membership function

$$\mu_k : X \times X \to [0,1].$$

A further example of a non-crisp data format is a utility function format. For example, for device $D_k$, the presentity can provide his/her preferences on X as a set of 6 utility values, $U^k = \{u^k, 1, u^k, 2, u^k, 3, u^k, 4, u^k, 5, u^k, 6\}$, k = 1, ...' n. An additional example of a non-crisp data format is a linguistic ranking format, in which the presentity indicates his/her preferences in a manner of pairwise comparison. For example, the presentity can enter or select one of the following options for each media type supported on each device (and each media type supported by each application running each device): (a) Don't care; (b) Much less important; (c) Less important; (d) Equally important; (e) More important; or (f) Much more important. It should be understood that other linguistic formats may also be used to determine the presentities' device/media type preferences.

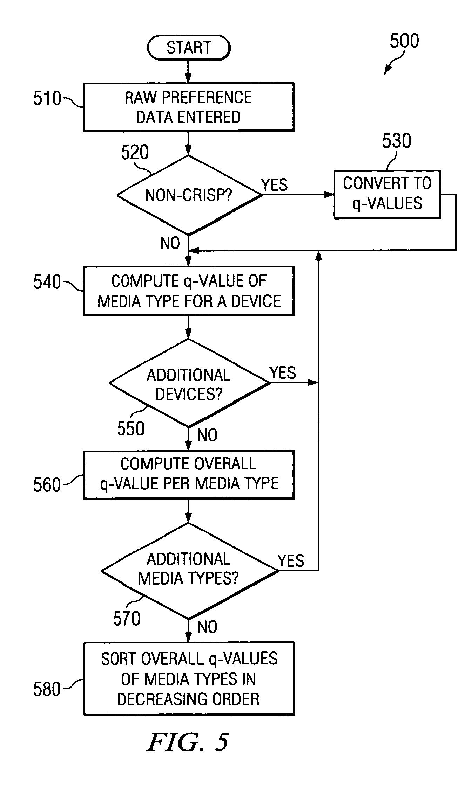

FIGURE 5 is a flowchart illustrating an exemplary process 500 for transforming a device view of presentity preferences into a media view, in accordance with embodiments of the present invention. Initially, at block 510, the presentity enters raw preference data in a variety of formats into the presence system. If the raw preference data is in a non-crisp format at block 520, the non-crisp data is converted into crisp data (q-values) for each media type supported on each device (and, possibly, for each media type supported by each application running on each device) at block 530. The raw preference data (crisp and converted non-crisp) is used to compute a q-value for a particular media type associated with a particular device at block 540. For example, for presentity P, assume that he/she has n (≥1) devices, say $D = \{D_1, D_2, ..., D_n\}$, that can be used in communication, and $X = (text_{rt}, voice_{rt}, mm_{rt}, text_{nrt}, voice_{nrt}, mm_{nrt}\}$ is the set of media types. Also assume that for device $D_k$, there are $s = S_k$ (≥0) applications $A = \{A^k, 1, A^k, 2, A^k, s\}$ running on $D_k$ (k = 1, ..., n). Then, for each media type x ∈ X, the q-value of x associated to device $D_k$ can be computed as:
$q_k(x) = \max\{q_k \times q_x(A^k, 1), q_k \times q_x(A^k, 2), \ldots, q_k \times q_x(A^k, s), q_x\}$.

Thus, the q-value for a particular media type on a particular device is computed as the maximum q-value entered for that media type on that device by the presentity. Once the q-value for a particular media type on each device computed at block 550, the overall q-value of x (the overall q-value for that particular media type across all of the presentities' devices) can be calculated at block 560 by:
$q(x) = \max\{q_1(x), \ldots, qn(x)\}$.

Thus, the overall q-value for a particular media type across all of the devices is computed as the maximum q-value computed for that media type for each device. At block 570, this process is repeated for each media type available to the presentity. Once all of the overall q-values have been computed for all of the media types, the values $\{q_x | x \in X\}$ are sorted in the deceasing order to determine the preferred order of media types at block 580.

The following features, separately or in any combination, may also constitute advantageous embodiments of the described and/or claimed invention:

- The described and/or claimed presence system, wherein said raw preference data includes non-crisp data, and wherein said presence server is further operable to use said non-crisp data to determine a q-value for each media type supported on each device associated with said presentity;

- The described and/or claimed presence system, wherein said non-crisp data includes at least one of an order of preference of media types supported on each device associated with said presentity, a fuzzy preference relation of media types supported on each device associated with said presentity, a utility value for each media type supported on each device associated with said presentity and a linguistic ranking of media types supported on each device associated with said presentity;

- A presence server, comprising: a data adapter capable of collecting raw preference data from a presentity in a variety of formats, said raw preference data including a preference indication for each media type supported by each device associated with said presentity; and a controller operable to process said raw preference data to determine a preferred order of media types and provide said preferred order of media types to a watcher of said presentity;

- The described and/or claimed presence server, wherein said data adapter includes a crisp data adapter capable of collecting crisp data indicating a q-value for each media type supported by each application running on each device associated with said presentity;

- The described and/or claimed presence server, wherein said data adapter further includes a non-crisp data adapter capable of collecting non-crisp data, and wherein said non-crisp data adapter is operable to determine a q-value for at least each media type supported on each device associated with said presentity using said non-crisp data;

- The described and/or claimed presence server, wherein said controller is further operable to compute a total q-value for each media type supported on each device from said crisp data and said non-crisp data;

- The described and/or claimed presence system, wherein said presence server is further operable to compute an overall q-value for each media type from said total q-value computed for each device;

- The described and/or claimed presence system, wherein said presence server is further operable to determine said preference order of media types from said overall q-value computed for each media type.

As will be recognized by those skilled in the art, the innovative concepts described in the present application can be modified and varied over a wide rage of applications. Accordingly, the scope of patents subject matter should not be limited to any of the specific exemplary teachings discussed, but is instead defined by the following claims.

**Claims**

1. A presence system, comprising:

   a presence server capable of collecting raw preference data from a presentity in a variety of formats, said raw preference data including a preference indication for each media type supported by each device associated with said presentity; wherein said presence server is operable to process said raw preference data to determine a preferred order of media types and provide said preferred order of media types to a watcher of said presentity.

2. The presence system of Claim 1, wherein said raw preference data includes crisp data indicating a q-value for each device associated with said presentity.

3. The presence system of Claim 2, wherein said crisp data further includes a q-value for each media type supported on each device associated with said presentity.

4. The presence system of Claim 3, wherein said crisp data further includes a q-value for each media type supported by each application running on each device associated with said presentity.

5. The presence system of Claim 4, wherein said presence server is further operable to compute a total q-value for each media type supported on each device from said crisp data.

6. The presence system of Claim 5, wherein said presence server is further operable to compute an overall q-value for each media type from said total q-value computed for each device.

7. The presence system of Claim 6, wherein said presence server is further operable to determine said preference order of media types from said overall q-value computed for each media type.

8. A method for transforming a device view of presentity preferences into a media view, comprising the steps of:

   collecting raw preference data from a presentity in a variety of formats, said raw preference data including a preference indication for each media type supported by each device associated with said presentity;
   processing said raw preference data to determine a preferred order of media types; and
   providing said preferred order of media types to a watcher of said presentity.

9. The method of Claim 8, wherein said raw preference data includes at least one of crisp data and non-crisp data, wherein said crisp data indicates a q-value for each media type supported by each application running on each device associated with said presentity, and further comprising the step of:

   determining a q-value for at least each media type supported on each device associated with said presentity using said non-crisp data.

10. The method of Claim 9, wherein said processing further includes computing a total q-value for each media type supported on each device from said crisp data and said non-crisp data.

11. The method of Claim 10, wherein said processing further includes computing an overall q-value for each media type from said total q-value computed for each device.

12. The method of Claim 11, wherein said processing further includes determining said preference order of media types from said overall q-value computed for each media type.

*FIG. 1*

*FIG. 2*

*FIG. 3*

*FIG. 4*

FIG. 5

**European Patent Office**

**EUROPEAN SEARCH REPORT**

Application Number

EP 05 02 4719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KHARTABIL E LEPPANEN NOKIA T MORAN H: "Requirements for Presence Specific Event Notification Filtering draft-ietf-simple-pres-filter-reqs-02; draft-ietf-simple-pres-filter-reqs-02.txt" IETF STANDARD-WORKING-DRAFT, INTERNET ENGINEERING TASK FORCE, IETF, CH, vol. simple, no. 2, 14 August 2003 (2003-08-14), XP015003379 ISSN: 0000-0004 * abstract * * paragraphs [0001], [03.4], [0007] * ----- | 1,8 | H04L29/06 |
| Y | PATENT ABSTRACTS OF JAPAN vol. 2003, no. 12, 5 December 2003 (2003-12-05) & JP 2004 240821 A (NEC CORP), 26 August 2004 (2004-08-26) * abstract * ----- | 1,8 | |
| A | US 2004/015569 A1 (LONNFORS MIKKO ET AL) 22 January 2004 (2004-01-22) * the whole document * ----- | 1-12 | TECHNICAL FIELDS SEARCHED (IPC) H04L |
| A | SUGANO S FUJIMOTO FUJITSU H: "CPIM Presence Information Data Format; draft-sugano-cpim-pidf-00.txt;" IETF STANDARD-WORKING-DRAFT, INTERNET ENGINEERING TASK FORCE, IETF, CH, July 2001 (2001-07), XP015035814 ISSN: 0000-0004 * the whole document * ----- | 1-12 | |

The present search report has been drawn up for all claims

| Place of search | Date of completion of the search | Examiner |
|---|---|---|
| The Hague | 21 March 2006 | Pereira, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 1 672 868 A1

## ANNEX TO THE EUROPEAN SEARCH REPORT
## ON EUROPEAN PATENT APPLICATION NO.

EP 05 02 4719

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2006

| Patent document cited in search report | | Publication date | Patent family member(s) | | Publication date |
|---|---|---|---|---|---|
| JP 2004240821 | A | 26-08-2004 | NONE | | |
| US 2004015569 | A1 | 22-01-2004 | AU | 2003281101 A1 | 02-02-2004 |
| | | | CN | 1669021 A | 14-09-2005 |
| | | | EP | 1532541 A2 | 25-05-2005 |
| | | | WO | 2004008178 A2 | 22-01-2004 |
| | | | US | 2004177134 A1 | 09-09-2004 |

EPO FORM P0459

For more details about this annex : see Official Journal of the European Patent Office, No. 12/82

12